**Europäisches Patentamt**

**European Patent Office**

**Office européen des brevets**

(11) Veröffentlichungsnummer: **0 151 381**
**B1**

(12) # EUROPÄISCHE PATENTSCHRIFT

(45) Veröffentlichungstag der Patentschrift:
20.05.87

(51) Int. Cl.⁴: **B 62 D 25/16**

(21) Anmeldenummer: **85100008.3**

(22) Anmeldetag: **01.01.85**

(54) **Kotflügel für Fahrzeuge, insbesondere für die Hinterräder von Sattelzugmaschinen.**

(30) Priorität: **18.01.84 DE 3401521**

(43) Veröffentlichungstag der Anmeldung:
**14.08.85 Patentblatt 85/33**

(45) Bekanntmachung des Hinweises auf die Patenterteilung:
**20.05.87 Patentblatt 87/21**

(84) Benannte Vertragsstaaten:
**DE FR GB IT NL SE**

(56) Entgegenhaltungen:
**EP-A-0 109 577**
**EP-A-0 121 641**
**DE-A-3 239 894**
**FR-A-2 082 354**
**FR-A-2 424 170**
**FR-A-2 440 306**
**GB-A-1 218 911**

(73) Patentinhaber: **Iveco Magirus Aktiengesellschaft,
Schillerstrasse 2, D-7900 Ulm/Donau (DE)**

(72) Erfinder: **Ritter, Ingomar, Sendener Strasse 12,
D-7910 Neu- Ulm 9 (DE)**
Erfinder: **Holzhofer, Werner, Ratgebweg 13, D-7900
Ulm- Lehr (DE)**

(74) Vertreter: **Socha, Peter, Iveco Magirus AG
Postfach 2740 Schillerstrasse 2, D-7900 Ulm (DE)**

LIBER, STOCKHOLM 1987

## Beschreibung

Die Erfindung betrifft einen Kotflügel für Fahrzeuge, vorzugsweise für Hinterräder von Kraftfahrzeugen, insbesondere Zugmaschinen von Sattelanhängern, mit drei hintereinander angeordneten Kotflügelabschnitten gemäß Oberbegriff des Anspruchs 1.

Ein vorgenannter-Kotflügel mit einem elastischen Mittelteil ist aus DE-U- 6 910 057 bekannt. Das elastische Mittelteil ist bogenförmig ausgebildet und folgt in stetigem Übergang der Kotflügelkontur der benachbarten Abschnitte. Für ein Aufsatteln des Sattelanhängers wird der mittlere elastische Kotflügelabschnitt an den Hinterrädern der Zugmaschine vom Fabrzeugrähmen losgelöst, insbesondere dann, wenn niedrige Auflieger am Fahrzeug vorgesehen sind. Nach einem Ankuppeln des Sattelanhängers wird das elastische Mittelteil normalerweise wieder montiert, zumindest dann, wenn die Auflasten vergleichsweise gering sind. Demontage und Montage sind vergleichsweise aufwendig. Ein losgelöstes Mittelteil kann schlecht aufbewahrt werden, da es grundsätzlich schmutzbehaftet ist und im Fahrerhaus deshalb nur ungünstig aufbewahrt werden kann. Auch geht bei längerer Aufbewahrung die dem Teil anhaftende gebogene Form unter Umständen verloren. Ein demontiertes Teil wird in vielen Fällen neben die Straße gelegt und nach einem Aufsatteln vergessen.

Ein Kotflügel der eingangs genannten Gattung ist auch aus DE-B- 28 18 623 bekannt, bei dem das elastische Mittelteil folienartig als sogenanntes aufrollbares Spanntuch ausgebildet ist. Obgleich Montage und Demontage im Vergleich zu vorgenanntem Stand der Technik vereinfacht ist und das Mittelteil auch nicht verlorengehen kann, so ergibt sich als entscheidender Nachteil, daß ein ausgerolltes Spanntuch im Betrieb die Reifenfreigängigkeit nach oben stark einschränkt und das Tuch bei einem starken Einfedern durch den Reifen selbst zerstört werden kann.

Aufgabe der Erfindung ist die Schaffung eines Kotflügels für Fahrzeuge mit drei hintereinander angeordneten Abschnitten der eingangs genennten Art, der einen einfachen Aufbau besitzt und bei dem der mittlere elastische Abschnitt nicht nur leicht und verliersicher aus seiner Betriebsstellung losgelöst werden kann, sondern in der montierten Betriebsstellung auch für eine optimale Reifenfreigängigkeit nach oben sorgt.

Gelöst wird die der Erfindung zugrundeliegende Aufgabe durch die im kennzeichnenden Teil des Anspruchs 1 angegebenen Merkmale. Wesensmerkmal der Erfindung ist mithin die fahrzeugfeste Halterung des elastischen Mittelabschnitts des Rotflügels sowohl in seiner Mittellage als auch in seiner eingeschobenen Randlage. Dadurch kann der Mittelabschnitt bei einem Aufsatteln nicht verlorengehen. Er ist gesehen in Achsrichtung in eingebauten Zustand bogenförmig ausgebildet und grundsätzlich der Kontur der benachbarten bogenförmigen stabilen Kotflügelabschnitte angepaßt, wodurch ein Reifen den gleichen Freiraum nach oben besitzt wie bei den stabilen Kotflügelabschnitten. Dadurch kann das montierte elastische Mittelteil durch den Reifen im Betrieb praktisch nicht zerstört werden, wie dies bei bekannten Spanntüchern der Fall ist.

Der elastische mittlere Kotflügelabschnitt wird bevorzugt in den hinteren stabilen Kotflügelabschnitt eingeschoben. Er ist im Querschnitt im wesentlichen geradlinig und blattartig ausgebildet, besitzt in Umfangsrichtung Längsnoppen oder -versteifungen und weist eine Länge auf, die bevorzugt größer ist als die des hinteren Kotflügelabschnitts. Ist mithin das elastische Mittelteil in den hinteren Kotflügelabschnitt eingeschoben, so steht bodenseitig aus dem hinteren Kotflügelabschnitt ein Teil des Mittelabschnitts hervor, wo durch ein Spritzschutz entsteht, insbesondere dann, wenn bei niedrigem Auflieger das elastische Mittelteil in der letztgenannten Lage beibehalten und das Fahrzeug betrieben wird.

In besonders vorteilhafter Weiterbildung der Erfindung weist der mittlere Abschnitt an seinem vorderen Rand eine Befestigungseinrichtung insbesondere mit einem Gummispanner auf, der in der Mittellage des mittleren Abschnitts mit dem hinteren Rand des stabilen vorderen Kotflügelabschnitts und in der eingeschobenen Lage des mittleren Abschnitts mit dem vorderen Rand des hinteren stabilen Kotflügelabschnitts auf einfache lösbare Weise verbunden ist.

Auf diese Weise ergibt sich eine problemlose Montage und Demontage.

In etwa in der Mitte des hinteren Kotflügelabschnitts ist bevorzugt zumindest eine innere Querhalterung angeordnet, die mit der Kotflügelumfangswand einen Führungsschlitz für den einschiebbaren mittleren elastischen Abschnitt ausbildet. Die innere Querhalterung kann Rohrquerschnitt aufweisen und ist in besonderer Ausführungsform der Erfindung axialdrehbar, um ein Einführen des elastischen Mittelteils zu erleichtern, unterstützt vom Eigengewicht des Teiles selbst. Auch dient die innere Querhalterung dazu, daß das elastische Teil in der eingeschobenen Lage nicht mit einem Reifen in Berührung kommen kann.

Weitere Merkmale der Erfindung sind in den Unteransprüchen angeführt.

Die Erfindung wird nachfolgend anhand eines Ausführungsbeispiels unter Bezugnahme auf die Zeichnung näher beschrieben; es zeigen:

Fig. 1 in schematischer Seitenansicht einen dreiteiligen Kotflügel nach der Erfindung bei befestigtem elastischen Mittelabschnitt in seiner Mittellage,

Fig. 2 den Kotflügel nach Fig. 1 mit einem elastischen Mittelabschnitt, der in den hinteren Kotflügelabschnitt eingeschoben ist, und

Fig. 3 einen Querschnitt längs der Linie A-B der Fig. 2.

Fig. 4 einen Querschnitt längs der Linie C-D der Fig. 1.

Der in der Zeichnung dargestellte Kotflügel 1 ist für die Hinterräder eines Sattelschleppers vorgesehen und besitzt drei hintereinander angeordnete Abschnitte 2, 3, 4, von denen der vordere Abschnitt 2 und der hintere Abschnitt 4 stabil ausgebildet und an Teilen des Fahrzeugrahmens 5 in an sich bekannter Weise befestigt sind. Zwischen den vorderen Abschnitt 2 und dem hinteren Abschnitt 4 befindet sich ein bogenförmiger elastischer Mittelabschnitt 3, der im Querschnitt im wesentlichen geradlinig und blattartig ausgebildet ist, wie es der Fig. 3 zu entnehmen ist. Der Mittelabschnitt weist voneinander beabstandete Längsnoppen 6 auf, die als Versteifungen dienen.

In seiner befestigten Mittellage ist der mittlere Kotflügelabschnitt 3 am hinteren Rand des vorderen Kotflügelabschnitts 2 mit Hilfe eines Gummispanners 8 einer Befestigungseinrichtung 7 derart befestigt, daß zwischen den Kotflügelabschnitten ein im wesentlichen stetiger bogenförmiger Übergang gegeben ist. Hinten ist der mittlere Abschnitt 3 entweder längsverschieblich im hinteren Kotflügelabschnitt 4 abgestützt oder aber durch einen Querbolzen abgesichert, so daß insgesamt eine hinreichende Befestigung des Mittelabschnitts gegeben und zum andern ein problemloses Lösen sichergestellt sind.

Das elastische Mittelteil 3 wird nach Lösen der Befestigungseinrichtung 7 aus der vorderen Lagerung gezogen und in den hinteren Kotflügelabschnitt 4 innen eingeschoben. Unterstützt durch das Eigengewicht des Mittelteils rutscht dieses an einer nachfolgend noch beschriebenen Führung entlang nach unten, bis die Befestigungseinrichtung 7 am vorderen Rand des hinteren Kotflügelabschnitts 4 zu liegen kommt und der Gummispanner 8 der Befestigungseinrichtung mit dem hinteren Kotflügelabschnitt verspannt und gesichert werden kann.

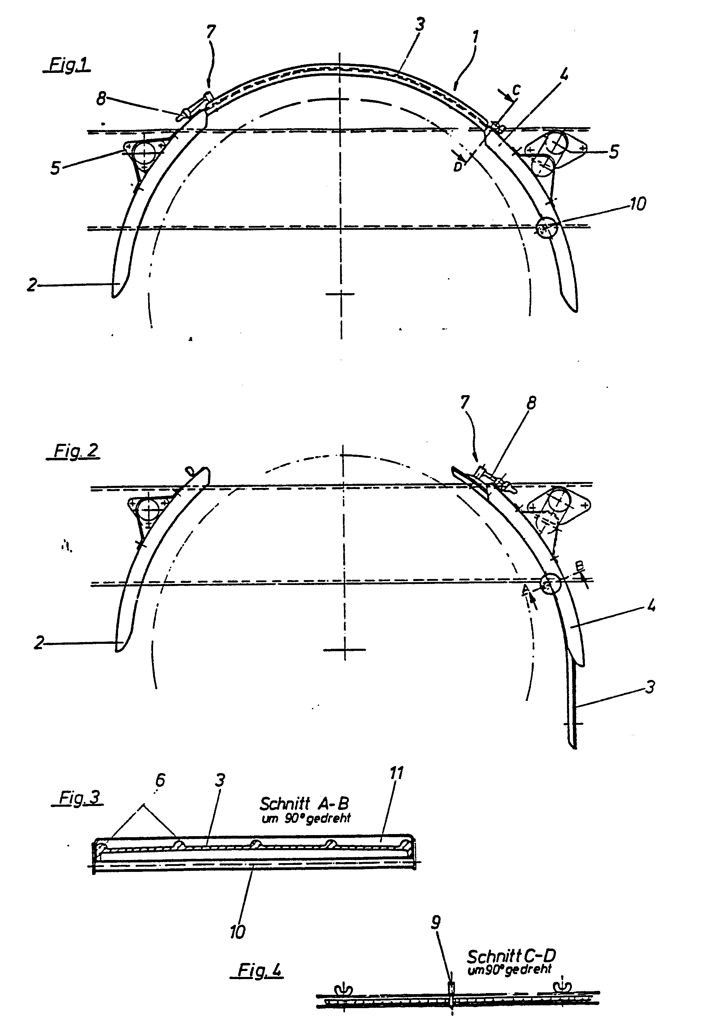

Das Mittelteil weist eine größere Länge als der hintere Kotflügelabschnitt 4 auf, wodurch im eingeschobenen Zustand des Mittelteils bodenseitig aus dem hinteren Kotflügelabschnitt ein Spritzschutz hervorsteht, wie dies der Fig. 2 zu entnehmen ist.

Die Führung im hinteren Kotflügelabschnitt besorgt eine bevorzugt als Stange ausgebildete innere Querhalterung 10 gemäß Fig. 3, die in etwa in der Mitte des hinteren Kotflügelabschnitts in Querrichtung axialdrehbar befestigt ist. Die Querhalterung 10 bildet mit der Kotflügelumfangswand einen Führungsschlitz 11, der in etwa der Breite des mittleren Kotflügelabschnitts 3 entspricht und gute Längsverschieblichkeit ermöglicht, auch bei verschmutztem Mittelteil.

**Patentansprüche**

1. Kotflügel (1) für Fahrzeuge, vorzugsweise für Hinterräder von Kraftfahrzeugen, insbesondere Zugmaschinen von Sattelanhängern, bestehend aus drei hintereinander angeordneten Abschnitten (2, 3, 4), von denen der vordere und der hintere Abschnitt (2, 4) stabil ausgebildet und am Fahrzeugrahmen (3) befestigt sind und der mittlere Abschnitt (3) aus einem elastischen Material gebildet, am vorderen und hinteren Abschnitt befestigt und aus seiner Mittellage lösbar ist, dadurch gekennzeichnet, daß der mittlere Abschnitt (3) nach einem Lösen aus seiner Mittellage in einen der beiden benachbarten Kotflügelabschnitte (2 bzw. 4) geschoben und in der eingeschobenen Lage befestigt werden kann.

2. Kotflügel nach Anspruch 1, dadurch gekennzeichnet, daß der mittlere Abschnitt (3) in den hinteren Kotflügelabschnitt (4) geschoben werden kann (Fig. 2).

3. Kotflügel nach Anspruch 2, dadurch gekennzeichnet daß der mittlere Abschnitt (3) in eingebautem Zustand eine in Seitenansicht gebogene Kontur aufweist, die im wesentlichen der Kontur des hinteren Kotflügelabschnitts (4) entspricht.

4. Kotflügel nach Anspruch 1 bis 3, dadurch gekennzeichnet, daß der mittlere Abschnitt (3) im Querschnitt im wesentlichen geradlinig und blattartig ausgebildet ist (Fig. 3).

5. Kotflügel nach Anspruch 4, dadurch gekennzeichnet, daß der mittlere Abschnitt (3) voneinander beabstandete Längsnoppen (6) oder -versteifungen aufweist.

6. Kotflügel nach den Ansprüchen 2 bis 3, dadurch gekennzeichnet, daß der mittlere Abschnitt (3) länger als der hintere Kotflügelabschnitt (4) ausgebildet ist und in der eingeschobenen Lage bodenseitig aus dem hinteren Kotflügelabschnitt hervorsteht.

7. Kotflügel nach Anspruch 2 bis 6, dadurch gekennzeichnet, daß der mittlere Abschnitt (3) an seinem vorderen Rand eine Befestigungseinrichtung (7) aufweist, die in der Mittellage des mittleren Abschnitts (3) mit dem hinteren Rand des vorderen Kotflügelabschnitts (2) und in der eingeschobenen Lage mit dem vorderen Rand des hinteren Kotflügelabschnitts (4) in einem lösbaren Befestigungseingriff steht.

8. Kotflügel nach Anspruch 7, dadurch gekennzeichnet, daß die Befestigungseinrichtung (7) einen Gummispanner (8) umfaßt.

9. Kotflügel nach Anspruch 2 bis 8, dadurch gekennzeichnet, daß die Breite des mittleren Abschnitts (3) in etwa der lichten inneren Breite des hinteren Kotflügelabschnitts (4) entspricht.

10. Kotflügel nach Anspruch 2 bis 9, dadurch gekennzeichnet, daß in etwa in der Mitte des hinteren Kotflügelabschnitts (4) zumindest eine innere Querhalterung (10) angeordnet ist, die mit der Kotflügelumfangswand einen Führungsschlitz (11) für den einschiebbaren mittleren Abschnitt (3) ausbildet.

11. Kotflügel nach Anspruch 10, dadurch gekennzeichnet, daß die innere querhalterung (10) Rohrquerschnitt aufweist.

12. Kotflügel nach Anspruch 10 oder 11, dadurch gekennzeichnet, daß die innere querhalterung (10) am hinteren Kotflügelabschnitt (4) axialdrehbar befestigt ist.

13. Kotflügel nach Anspruch 2 bis 12, dadurch gekennzeichnet, daß der mittlere Abschnitt (3) in seiner befestigten Mittellage am bzw. im hinteren Kotflügelabschnitt (4) längsverschieblich abgestützt ist.

## Claims

1. A mudguard (1) for a vehicle, primarily for the rear wheels of a motor vehicle, particularly of a semi-trailer tractor, the mudguard comprising three consecutively arranged sections (1, 2, 3) the front (2) and rear (4) ones of which are rigidly constructed and fastenable to the vehicle frame (5) whilst the intermediate section (3) is made of a resilient material, is attached to both the front and rear section yet is detachable from its intermediate position, characterized in that the intermediate section (3), after its detachment from its intermediate position, is slidable into one of the adjacent mudguard sections (2 or 4) and is securable in the position into which it has been slid.

2. A mudguard according to claim 1, characterized in that the intermediate section (3) is slidable into the rear section (4) of the mudguard (Fig. 2).

3. A mudguard according to claim 2, characterized in that the shape of the intermediate section (3) in its assembled state is, in a side view thereof, a curved one corresponding substantially to that of the rear section (4) of the mudguard.

4. A mudguard according to any of the claims 1 to 3, characterized in that the intermediate section (3) is, cross-sectionally, substantially straight and laminar (Fig. 3).

5. A mudguard according to claim 4, characterized in that the intermediate section (3) is provided with spacedly arranged and longitudinally-extending ribs (6) or reinforcements.

6. A mudguard according to any of the claims 2 to 5, characterized in that the intermediate section (3) is longer than the mudguard's rear section (4) and protrudes, after having been slid into the rear section, beyond that end thereof that is closest to the ground.

7. A mudguard according to any of the claims 2 to 5, characterized in that the intermediate section (3) is provided at its front edge with a fastener (7) which, if the intermediate section (3) is in its intermediate position, is detachably securable to the rear edge of the mudguard's front section (2) and, if the intermediate section has been slid into the mudguard's rear section (4) is detachably securable to the front edge thereof.

8. A mudguard according to claim 7, characterized in that the fastener (7) includes a rubber turnbuckle (8).

9. A mudguard according to any of the claims 2 to 8, characterized in that the overall width of the intermediate section (3) substantially corresponds to the inside width of the mudguard's rear section (4).

10. A mudguard according to any of the claims 2 to 9, characterized in that at least one inner transverse support (10) is arranged in and substantially mid-length of the mudguard's rear section (4) and forms in conjunction with the rear section's peripheral wall a guide slot (11) for the intermediate section (3) slidable into the rear section.

11. A mudguard according to claim 10, characterized in that the inner transverse support is of tubular cross-section.

12. A mudguard according to claim 10 or claim 11, characterized in that the inner transverse support (10) is secured to the mudguard's rear section (4) permitting it to be turned in sxial direction.

13. A mudguard according to any of the claims 2 to 12, characterized in that the intermediate section (3) in its attached intermediate position is longitudinally slidably supported on or in the mudguard's rear section (4).

## Revendications

1°) Garde-boue (1) pour véhicules, notamment pour les roues arrière de véhicules à moteur, en particulier de tracteurs de semi-remorque, composé de trois segments (2, 3, 4) prévus l'un derrière l'autre, parmi lesquels le segment avant et le segment arrière (2, 3) sont réalisés de manière rigide et sont fixés au châssis (5) du véhicule et en ce que le segment médian (3) est réalisé en un matériau relativement élastique en étant fixé au segment avant et au segment arrière et en pouvant se détacher de sa position médiane, caractérisé en ce que le segment médian (3), après desserrage de sa position médiane, peut être glissé dans l'un des deux segments de garde-boue voisins (2, 4) et être fixé dans la position rentrée.

2°) Garde-boue selon la revendication 1, caractérisé en ce que le segment médian (3) peut être glissé dans le segment arrière (4) de garde-boue (figure 2).

3°) Garde-boue selon la revendication 2, caractérisé en ce que le segment médian (3) présente à l'état monté, en vue de côté, un contour courbe qui correspond principalement au contour du segment de garde-boue (4) arrière.

4°) Garde-boue selon les revendications 1 à 3, caractérisé en ce que le segment median a une section qui est principalement droite et en forme de lame (figure 3).

5°) Garde-boue selon la revendication 4, caractérisé en ce que le segment médian (3) comporte des bossages longitudinaux (6) ou des nervures de rigidification, distantes les unes des autres.

6°) Garde-boue selon les revendications 2 à 5, caractérisé en ce que le segment médian (3) est plus long que le segment arrière (4) et lorsqu'il est en position rentrée, il dépasse du segment de garde-boue arrière au niveau du sol.

7°) Garde-boue selon les revendications 2 à 6, caractérisé en ce que le segment médian (3) comporte, à son bord avant, un dispositif de fixation (7) qui, en position médiane du segment médian (3), vient en prise avec le bord arrière du segment de garde-boue avant (2) et, en position rentrée, le bord avant du segment de garde-boue arrière (4) est en prise avec un dispositif de fixation détachable.

8°) Garde-boue selon la revendication 7, caractérisé en ce que le dispositif de fixation (7) comprend un tendeur en caoutchouc (8).

9°) Garde-boue selon les revendications 2 à 8, caractérisé en ce que, la largeur du segment médian (3) correspond sensiblement à la largeur interne libre du segment arrière (4) de garde-boue.

10°) Garde-boue selon les revendications 2 à 9, caractérisé en ce que sensiblement au milieu du segment arrière de garde-boue (4), il est prévu au moins un moyen de fixation transversal interne (10) qui forme avec la paroi périphérique du garde-boue, une fente de guidage (11) pour le segment médian (3), susceptible d'être rentré par coulissement.

11°) Garde-boue selon la revendication 10, caractérisé en ce que le moyen de fixation transversal (10) interne présente une section tubulaire.

12°) Garde-boue selon les revendications 10 ou 11, caractérisé en ce que le moyen de fixation transversal (10), interne, est fixé de manière rotative axialement au segment de garde-boue arrière (4).

13°) Garde-boue selon les revendications 2 à 12, caractérisé en ce que le segment médian (3) s'appuie lorsqu'il est en position médiane arrière ou s'appuie de manière coulissante longitudinalement sur le segment de garde-boue arrière (4).

_Fig.1_

_Fig. 2_

_Fig.3_

Schnitt A-B
um 90° gedreht

_Fig.4_

Schnitt C-D
um 90° gedreht